# EUROPÄISCHE PATENTANMELDUNG

(11) **EP 0 937 376 A1**
(43) Veröffentlichungstag der Anmeldung: **25.08.1999**
(21) Anmeldenummer: 98123698.7
(22) Anmeldetag: 12.12.1998
(51) Int. Cl.: A01B 49/02, A01B 33/10, A01B 23/02

(54) **Verfahren zur Behandlung von Bodenoberflächen und Vorrichtung mit einem rotatorisch bewegten Bodenbearbeitungsgerät**

(30) Priorität: 21.02.1998 DE 19807516; 08.07.1998 DE 19830390
(71) Anmelder: Müllers & Backhaus GmbH & Co. KG, 41844 Wegberg-Arsbeck (DE)
(72) Erfinder: Backhaus, Josef, 41844 Wegberg-Arsbeck (DE)
(74) Vertreter: Castell, Klaus, Dr.

(57) **Zusammenfassung**

Verfahrensmäßig wird vorgeschlagen, den Boden mit einer Kreiselegge (3) und anschließend mit einer Rüttelegge (4) zu behandeln, und dies wird mit einer Vorrichtung erzielt, bei der eine Kreiselegge (3) parallel zur Rüttelegge (4) angeordnet ist und zwischen Kreiselegge (3) und Rüttelegge (4) eine Kraftübertragungseinrichtung vorgesehen ist.

Vorzugsweise ist die Kreiselegge (3) von einem Antriebsfahrzeug und die Rüttelegge (4) von der Kreiselegge (3) antreibbar.

## Beschreibung

Die Erfindung betrifft ein Verfahren zur Behandlung von Bodenoberflächen, bei dem der Boden mit einem rotatorisch bewegten Bodenbearbeitungsgerät beandelt wird und eine Vorrichtung mit einem rotatorisch bewegten Bodenbearbeitungsgerät.

Unter rotatorisch bewegtem Bodenbearbeitungsgerät wird eine Bearbeitungsmaschine verstanden, bei der mindestens ein Werkzeug angetrieben um eine Achse rotiert. Derartige Geräte werden als Fräsen, Schnecken oder Kreiseleggen angeboten. Während bei Fräsen und Schnecken das Bodenbearbeitungsgerät um eine waagerechte Achse rotiert, rotiert bei Kreiseleggen mindestens ein Werkzeug um eine senkrechte Achse. Häufig sind mehrere senkrechte Achsen parallel nebeneinander vorgesehen, die jeweils mehrere uni die jeweilige Achse rotierende Werkzeuge aufweisen.

Insbesondere Kreiseleggen werden in der Landwirtschaft eingesetzt und finden in jüngerer Zeit neue Anwendungsgebiete im Bereich des Gartenund Landschaftsbaus. Bei der Hartplatzpflege dienen Kreiseleggen dem Aufrauen des Bodens und zur Entfernung von Unkraut. Kreiseleggen haben sich auch zur Entfernung von Unkraut aus den Fingen harter Oberflächen wie beispielsweise Pflasterflächen bewährt. Darüberhinaus werden Kreiseleggen häufig zum Einebenen von Mutterboden verwendet.

Bei allen diesen Anwendungsbereichen bringen Kreiseleggen häufig nicht das gewünschte Arbeitsergebnis und es wurde daher versucht, durch Veränderung der Zinkenform ein besseres Arbeitsergebnis zu erzielen. Die Entwicklung führte daher zu speziellen Bürsten oder schuhartigen Werkzeugen, die anstelle der Zinken eingesetzt werden.

Diese Maßnahmen sind jedoch immer nur auf einen ganz speziellen Anwendungszweck abgestimmt vorteilhaft und schon nach kürzeren Benutzungszeiten verschleißen die speziellen Zinkenelemente, so daß das gewünschte Arbeitsergebnis nicht mehr erzielt werden kann.

Der Erfindung liegt daher die Aufgabe zugrunde, ein Verfahren zur Behandlung von Bodenoberflächen, bei dem der Boden mit einem rotatorisch bewegten Bodenbearbeitungsgerät behandelt wird, derart weiterzuentwickeln, daß ein universeller Einsatz bei geringem Verschleiß der eingesetzten Werkzeuge erreicht wird. Außerdem wird eine Vorrichtung mit einem rotatorisch bewegten Bodenbearbeitungsgerät vorgeschlagen, mit der diese Aufgabe gelöst wird.

Verfahrensmäßig wird die Aufgabe nach dem, gattungsgemäßen Verfahren gelöst, bei dem der Boden anschließend mit einem translatorisch bewegten Bodenbearbeitungsgerät weiterbehandelt wird.

Unter translatorisch bewegtem Bodenbearbeitungsgerät wird ein Gerät verstanden, bei dem mindestens ein Werkzeug angetrieben sich auf einer Linie bewegt. Diese Linie muß nicht unbedingt gerade sein. Ein üblicherweise verwendetes translatorisch bewegtes Bodenbearbeitungsgerät ist die Rüttelegge.

Es ist zwar auch bekannt, verschiedene Bodenbearbeitungsschritte mit Rütteleggen vorzunehmen. Die Rüttelegge wird jedoch generell als Alternative zur Kreiselegge angesehen, da sie demselben Zweck dient und dieselben Nachteile wie die Kreiselegge hat. Auch die Rüttelegge führt in vielen Fällen zu keinem zufriedenstellenden Arbeitsergebnis, so daß der Fachmann anstelle der Verwendung von Rüttelegge oder Kreiselegge auf mechanische oder chemische Behandlungsverfahren zurückgreift.

Da die Verwendung von Rütteleggen oder Kreiseleggen jedoch in vielen Fällen der Unkrautbekämpfung dient, führt dies zu einem verstärkten Pestizideinsatz auf öffentlichen Flächen.

Erfindungsgemäß hat sich herausgestellt, daß trotz der Nachteile beider Eggenformen, die Behandlung des Bodens zunächst mit einem rotatorisch bewegten Bodenbearbeitungsgerät, wie beispielsweise einer Kreiselegge und anschließend einem translatorisch bewegten Bodenbearbeitungsgerät wie beispielsweise einer Rüttelegge zu hervorragenden Arbeitsergebnissen geführt hat und es deshalb entgegen dem ersten Anschein sinnvoll ist, beide Verfahren nacheinander in der angegebenen Reihenfolge durchzuführen.

Für spezielle Anwendungen ist es vorteilhaft, wenn zwischen der Behandlung des Bodens mit dem rotatorisch bewegten Bodenbearbeitungsgerät (Kreiselegge) und der Behandlung des Bodens mit dem translatorisch bewegten Bodenbearbeitungsgerät (Rüttelegge) Samen oder Zwiebeln in den Boden eingebracht werden. Während die Kreiselegge den Boden stark auflockert, führt die Rüttelegge zu einer verstärkten Einebenung des Bodens und erlaubt es, nach Einbringen des Saatgutes den Boden weiterzubehandeln.

Die erfindungsgemäße Vorrichtung weist ein rotatorisch bewegtes Bodenbearbeitungsgerät auf, wobei parallel zum rotatorisch bewegten Bodenbearbeitungsgerät ein translatorisch bewegtes Bodenbearbeitungsgerät angeordnet ist und das rotatorisch bewegte Bodenbearbeitungsgerät und das translatorisch bewegte Bodenbearbeitungsgerät von der gleichen Kraftquelle gespeist werden.

Dieses Kombigerät verursacht bei der Herstellung relativ hohe Kosten. Überraschenderweise führt dieses Kombigerät jedoch zu hervorragenden Arbeitsergebnissen, da sich erfreulicherweise die Nachteile beider Geräte gegeneinander aufheben. Außerdem führt die Kraftübertragungseinrichtung zu einer kompakten Vorrichtung, die es erlaubt, in einem Arbeitsgang Bodenoberflächen höchst effizient zu bearbeiten.

Vorteilhaft ist es, wenn das rotatorisch bewegte Bodenbearbeitungsgerät von einem Antriebsfahrzeug antreibbar ist und das translatorisch bewegte Bodenbearbeitungsgerät von den, rotatorisch bewegten Bodenbearbeitungsgerät antreibbar ist. Dies erlaubt es, den Kraftfluß von, Antriebsfahrzeug über das rotatorisch bewegte Bodenbearbeitungsgerät zum translatorisch bewegten Bodenbearbeitungsgerät zu leiten, so daß die in dieser Reihenfolge angeordneten Aggregate jeweils vom benachbarten Aggregat angetrieben werden.

Besonders vorteilhaft hat sich ein Riemen als Kraftübertragungseinrichtung zwischen rotatorisch bewegtem Bodenbearbeitungsgerät und translatorisch bewegtem Bodenbearbeitungsgerät bewährt. Der Riemen ermöglicht die Einstellung eines Übersetzungsverhältnisses und impliziert eine Rutschkupplung, die das angetriebene Aggregat schützt.

Ein einfacher Antrieb des translatorisch bewegtem Bodenbearbeitungsgerätes wird dadurch erzielt, daß die Kraftübertragungseinrichtung einen Exzenter aufweist. Dieser Exzenter erlaubt es, die Kreisbewegung des rotatorisch bewegtem Bodenbearbeitungsgerätes in eine Lateralbewegung des translatorisch bewegtem Bodenbearbeitungsgerätes umzuformen.

Ein universeller Einsatz der Vorrichtung wird vor allem dadurch erreicht, daß das translatorisch bewegte Bodenbearbeitungsgerät und das rotatorisch bewegte Bodenbearbeitungsgerät relativ zueinander höhenverstellbar sind. Dies erlaubt es, die Vorrichtung an den jeweiligen Verwendungszweck optimal anzupassen.

Als besonders vorteilhaft hat sich erwiesen, daß das rotatorisch bewegte Bodenbearbeitungsgerät Zinken aufweist, die in einer Ansicht vom Boden aus konkav ausgebildet sind und/oder das translatorisch bewegte Bodenbearbeitungsgerät Zinken aufweist, die dachförmig mit quer zur Bewegungsrichtung verlaufenden Seitenkanten ausgebildet sind. Die konkave Ausbildung führt zu einer schneidenartigen Umfangslinie und die dachförmige Ausbildung führt zu quer zur Bewegungsrichtung der Zinken verlaufenden am Boden angreifenden schneidenartigen Kanten. Insbesondere die dachförmige Ausbildung hat sich als besonders geeignet für die Entfernung von Unkraut aus Pflaster- oder Hartplatzflächen erwiesen.

Für spezielle Einsatzzwecke ist es von Vorteil, wenn das rotatorisch bewegte Bodenbearbeitungsgerät und/oder das translatorisch bewegte Bodenbearbeitungsgerät als Zinken flexible Enden aufweisen. Diese flexiblen Enden können nach Art von Bürsten ausgebildet sein und aus Kunststoff, Metall oder ähnlichen Materialien hergestellt sein. Es eignen sich jedoch auch eine Vielzahl an Zinken, die mehr oder weniger flexibel in oszillierender oder kreisartiger Bewegung über die Oberfläche geführt werden.

Letztlich eignet sich die Vorrichtung auch zum Einsähen oder Stecken von Samen oder Zwiebeln, wenn zwischen rotatorisch bewegtem Bodenbearbeitungsgerät und translatorisch bewegten, Bodenbearbeitungsgerät eine Säh- oder Steckvorrichtung angeordnet ist.

Ein Ausführungsbeispiel einer erfindungsgemäßen Vorrichtung ist in der Zeichnung dargestellt und wird im folgenden näher beschrieben. Es zeigt,
- Figur 1: eine schematische Ansicht einer erfindungsgemäßen Vorrichtung in perspektivischer Darstellung,
- Figur 2: eine alternative Ausführungsform einer Zinke der Rüttelegge,
- Figur 3: eine alternative Ausführungsform einer Zinke der Kreiselegge und
- Figur 4: eine alternative Ausführungsform einer Hebevorrichtung zum Anheben der Rüttelegge.

Die Vorrichtung 1 besteht im wesentlichen aus dem Antriebsfahrzeug 2, dem Kreiseleggenteil 3 und dem Rütteleggenteil 4.

Am Antriebsfahrzeug ist in konventioneller Art und Weise über eine Flanschverbindung 5 ein im wesentlichen bekanntes Kreiseleggenteil 3 angeordnet. Dieses Kreiseleggenteil 3 hat mehrere kreuzförmige Bearbeitungswerkzeuge 6, 7, 8 an denen jeweils vier Zinken 9 senkrecht nach unten zur Bodenfläche weisend angeordnet sind, so daß beim Antreiben der Kreiselegge sich jeweils vier Zinken um eine senkrechte Achse drehen.

Eine dieser senkrechten Achsen 10 ist aus der oberen Abdeckung 11 des Kreiseleggenteils 3 herausgeführt und trägt eine erste Riemenscheibe 12. Der Riemen 13 verbindet die erste Riemenscheibe 12 mit einer zweiten Riemenscheibe 14, die über eine Achse 15 mit einer Exzenterscheibe 16 verbunden ist. Die Exzenterscheibe 16 ist wiederum über eine in ihrer Länge verstellbare Stange 17 mit einem Seitenteil 18 der Rüttelegge 4 verbunden, so daß dieses Seitenteil bei einer Drehung der Exzenterscheibe 16 oszillierend hin und her bewegt wird. Diese oszillierende Bewegung wird über zwei Bügel 19, 20 in konventioneller Weise auf ein weiteres Seitenteil 21 der Egge 4 übertragen.

Dies hat zur Folge, daß durch einen Antrieb an! Flansch 5 die Zinken 9 des Kreiseleggenteils 3 auf Kreislinien rotieren und die Zinken 22 des Rütteleggenteils 4 sich oszillierend hin und her bewegen, wobei die Zinken des vorderen Teils 21 der Rüttelegge 4 sich jeweils in entgegengesetzter Richtung zu den Zinken (nicht gezeigt) des gegenüberliegenden Rütteleggenteils 18 bewegen.

An den Seitenteilen des Kreiseleggenteils 3 ist drehbeweglich ein Gestell 23 befestigt, das dazu dient, das Kreiseleggenteil auf der anderen Seite der Rüttelegge mittels am Boden laufender Räder 24, 25, 26, abzustützen. Dieses Gestell 23 ist mittels Spanneinrichtungen 27, 28 um eine Achse 29 schwenkbar, um die Höhe der Kreiselegge einzustellen.

An der Vorderseite der Kreiselegge ist ein nach vorne weisender Arm 30 angebracht, der einen weiteren Arm 32 um die Achse 31 des Armes 30 schwenkbar hält. An diesem weiteren Arm 32 ist die Rüttelegge 4 drehbeweglich befestigt. Außerdem ist an der Kreiselegge eine nach vorne weisende L-förmige Halterung 33 angebracht, an deren vorderem Ende eine Spanneinrichtung 34 befestigt ist. Dies ermöglicht es, durch Verkürzen der Spanneinrichtung 34 die Rüttelegge 4 anzuheben. Da dadurch jedoch die Rüttelegge relativ zur Kreiselegge in eine schräge Position gerät, ist eine weitere Spanneinrichtung 35 zwischen den, Arm 32 und einem senkrecht von der Rüttelegge 4 nach oben weisenden Halter 36 vorgesehen, der es erlaubt, die Rüttelegge in einer waagerechten Position einzutarieren.

Da sich durch die Höhenverstellung auch der Abstand zwischen Rüttelegge 4 und Exzenterscheibe 16 verändert, ist auch die diese Teile verbindende Stange 17 in ihrer Länge einstellbar.

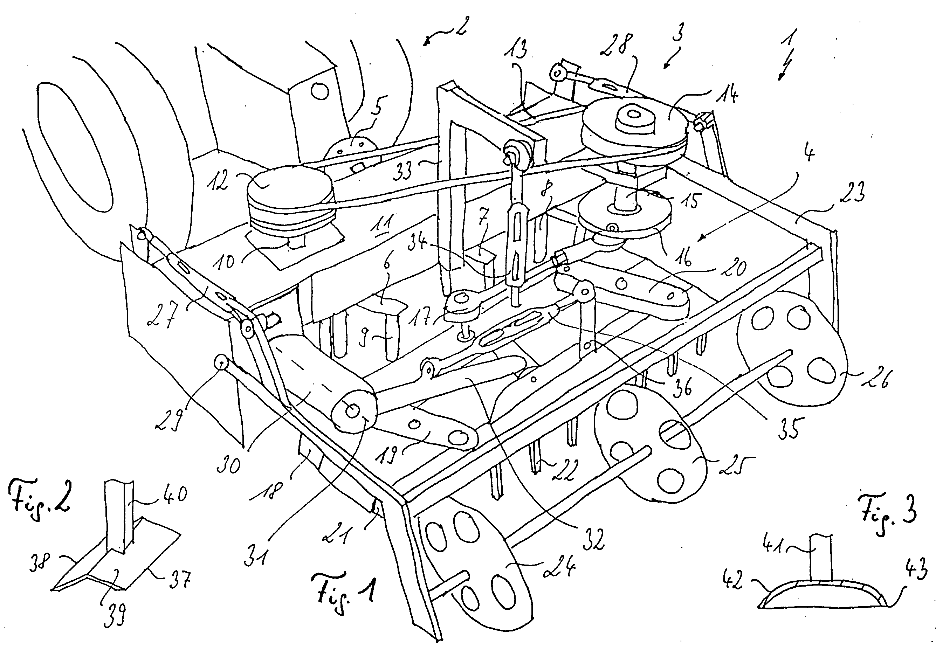

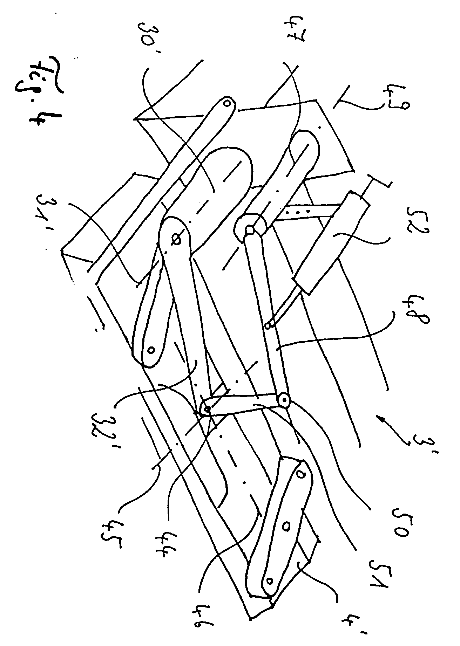

Vorteilhafte Ausgestaltungen der Zinken 9 bzw. 22 sind in den Figuren 2 und 3 dargestellt.

Die Figur 2 zeigt eine Ausführungsform einer Zinke für das Rütteleggenteil 4. Diese Zinke hat zwei quer zur Bewegungsrichtung der Zinke angeordnete Seitenkanten 37 und 38 zwischen denen sich ein dachförmig gebogenes Metallstück 39 erstreckt. Am Giebel dieses dachförmigen Metallstücks 39 ist ein Eisenstab 40 angeschweißt, der die Zinke mit dem Rest der Rüttelegge verbindet.

Diese Zinke hat den Vorteil, daß die quer zur Bewegungsrichtung verlaufenden wirksamen Kanten verlängert werden. Die Zinke hat für jede Bewegungsrichtung eine vordere Kante, die beispielsweise Unkraut direkt oberhalb der Bodenfläche abschneidet oder ausreißt und mittels der anschließenden schrägen Dachfläche das abgeschnittene oder ausgerissene Material abhebt.

Diese Art der Hebevorrichtung erlaubt es, das Rütteleggenteil 4' relativ zum Kreiseleggenteil 3' einfach mittels der Handspindel 52 in der Höhe zu variieren. Insbesondere die Länge der Verbindungsstange zwischen der Rüttelegge 4' und dem Antrieb muß dabei nicht variiert werden.

Bei der in Figur 3 gezeigten Zinke ist an den Zinkenschaft 41 ein kuppelförmiges konkaves Unterteil 42 angeschweißt, das beispielsweise auch als spitzer Hut ausgebildet sein könnte. Auch diese Zinkenform ist dazu geeignet, die als Schneide wirksame untere Randfläche 43 der Zinke zu vergrößern. Die konkave Zinke mit dem kuppelförmigen Unterteil 42 eignet sich vor allem zum Einsatz bei Kreiseleggen.

Eine zwischen der Kreiselegge und der Rüttelegge angeordnete Säh- oder Steckvorrichtung ist zugunsten der Übersichtlichkeit in der Zeichnung nicht dargestellt.

Die in Figur 1 gezeigte relativ aufwendige Vorrichtung zum Anheben der Rüttelegge 4 relativ zur Kreiselegge 3 kann auch durch eine Parallelogrammvorrichtung ersetzt werden. Eine derartige Einrichtung ist in Figur 4 schematisch dargestellt. Auch bei dieser Einrichtung ist an der Vorderseite der Kreiselegge 3' ein nach vorne weisender Arm 30' angebracht, der einen weiteren Arm 32' uni die Achse 31' des Armes 30' schwenkbar hält. An diesem weiteren Arm 32' ist die Rüttelegge 4' drehbeweglich befestigt. Das Scharnier 44 ist dabei so ausgebildet, daß die Rüttelegge 4' um die Achse 45 drehbar gelagert ist. Eine zusätzliche drehbare Lagerung um eine in der Ebene der Rüttelegge liegende zur Achse 45 senkrechte Achse 46 ist ebenfalls möglich, aber in der Praxis meist nicht notwendig.

Zum Anheben der Rüttelegge 4' ist oberhalb des Armes 30' parallel ein weiterer Arm 47 angeordnet, an dessen Ende ein Arm 48 parallel zum Arm 32' um die Achse 49 drehbeweglich gelagert ist. Das Ende 50 des Armes 48 ist über eine Verbindung 51 mit dem Gelenk 44 verbunden, so daß die Arme 48 und 32' wie bei einem Parallelogramm parallel zueinander beweglich sind.

Mit einer Handspindel 52, die am Kreiseleggenteil 3 befestigt ist, kann der Arm 48 auf und ab bewegt werden, wobei die Verbindung 51 sich auf einer Geraden auf und ab bewegt.

Bei der Verwendung der erfindungsgemäßen Vorrichtung 1 wird die Vorrichtung derart von einem Zugfahrzeug 2 gezogen, daß zuerst mittels der Kreiselegge der Boden aufgerauht und anschließend mit der Rüttelegge weiterbehandelt wird. Dadurch wird eine schnelle, extrem sorgfältige Bearbeitung der Bodenflächen erreicht.

## Patentansprüche

1. Verfahren zur Behandlung von Bodenoberflächen, bei dem der Boden mit einem rotatorisch bewegten Bodenbearbeitungsgerät (3) behandelt wird, ***dadurch gekennzeichnet, daß*** der Boden anschließend mit einem translatorisch bewegten Bodenbearbeitungsgerät (4) weiterbehandelt wird.

2. Verfahren nach Anspruch 1, ***dadurch gekennzeichnet, daß*** das rotatorisch bewegte Bodenbearbeitungsgerät eine Kreiselegge ist.

3. Verfahren nach Anspruch 1 oder 2, ***dadurch gekennzeichnet, daß*** das translatorisch bewegte Bodenbearbeitungsgerät eine Rüttelegge ist.

4. Verfahren nach einem der vorhergehenden Ansprüche*, **dadurch gekennzeichnet, daß*** zwischen der Behandlung des Bodens mit dem rotatorisch bewegten Bodenbearbeitungsgerät (3) und der Behandlung des Bodens mit dem translatorisch bewegten Bodenbearbeitungsgerät (4) Samen oder Zwiebeln in den Boden eingebracht werden.

5. Vorrichtung mit einem rotatorisch bewegten Bodenbearbeitungsgerät, ***dadurch gekennzeichnet, daß*** parallel zum rotatorisch bewegten Bodenbearbeitungsgerät (3) ein translatorisch bewegtes Bodenbearbeitungsgerät (4) angeordnet ist.

6. Vorrichtung nach Anspruch 5 ***dadurch gekennzeichnet, daß*** das rotatorisch bewegte Bodenbearbeitungsgerät (3) und das translatorisch bewegte Bodenbearbeitungsgerät (4) von der gleichen Kraftquelle (5) gespeist werden.

7. Vorrichtung nach Anspruch 5 oder 6, ***dadurch gekennzeichnet, daß*** das rotatorisch bewegte Bodenbearbeitungsgerät (3) von einem Antriebsfahrzeug (2) antreibbar ist und das translatorisch bewegte Bodenbearbeitungsgerät (4) von den, rotatorisch bewegten Bodenbearbeitungsgerät (3) antreibbar ist.

8. Vorrichtung nach einem der Ansprüche 5 bis 7, ***dadurch gekennzeichnet, daß*** das translatorisch bewegte Bodenbearbeitungsgerät (4) und das rotatorisch bewegte Bodenbearbeitungsgerät (3) relativ zueinander höhenverstellbar sind.

9. Vorrichtung nach einem der Ansprüche 5 bis 8, ***dadurch gekennzeichnet, daß*** das rotatorisch bewegte Bodenbearbeitungsgerät (3) Zinken aufweist, die in einer Ansicht vom Boden aus konkav ausgebildet sind und/oder das translatorisch bewegte Bodenbearbeitungsgerät (4) Zinken aufweist, die dachförmig mit quer zur Bewegungsrichtung verlaufenden Seitenkanten (37, 38) ausgebildet sind.

10. Vorrichtung nach einem der Ansprüche 5 bis 9, ***dadurch gekennzeichnet, daß*** das rotatorisch bewegte Bodenbearbeitungsgerät (3) und/oder das translatorisch bewegte Bodenbearbeitungsgerät (4) als Zinken flexible Enden aufweisen.

11. Vorrichtung nach einem der Ansprüche 5 bis 10, ***dadurch gekennzeichnet, daß*** zwischen rotatorisch bewegtem Bodenbearbeitungsgerät (3) und translatorisch bewegtem Bodenbearbeitungsgerät (4) eine Säh- oder Steckvorrichtung angeordnet ist.

12. Vorrichtung nach einem der Ansprüche 5 bis 11, ***dadurch gekennzeichnet, daß*** die Vorrichtung ein System mit Walzen, Rollen oder Scheiben (24, 25, 26) zur Abstützung und Führung auf dem Boden aufweist.

13. Vorrichtung nach Anspruch 12, ***dadurch gekennzeichnet, daß*** das System (24, 25, 26) etwa so breit wie die Vorrichtung ausgebildet ist.

14. Vorrichtung nach einem der Ansprüche 5 bis 13, ***dadurch gekennzeichnet, daß*** das rotatorisch bewegte Bodenbearbeitungsgerät (3) und/oder das translatorisch bewegte Bodenbearbeitungsgerät (4) pendelnd um eine in Fahrtrichtung liegende Achse aufgehängt sind.
